# EUROPEAN PATENT SPECIFICATION

(11) **EP 4 607 892 B1**
(45) Date of publication and mention of the grant of the patent: **21.10.2026**
(21) Application number: 23933825.4
(22) Date of filing: 20.11.2023
(51) Int. Cl.: H04L 67/1095, H04L 9/32, G06F 11/20, G06F 16/27, G06F 11/18, G06F 11/1474, G06F 16/23, H04L 9/00, H04L 41/00, H04L 9/40

(54) **NODE CONSENSUS METHOD AND APPARATUS, AND ELECTRONIC DEVICE, STORAGE MEDIUM AND PROGRAM PRODUCT**
KNOTENKONSENSVERFAHREN UND -VORRICHTUNG SOWIE ELEKTRONISCHE VORRICHTUNG, SPEICHERMEDIUM UND PROGRAMMPRODUKT
PROCÉDÉ ET APPAREIL DE CONSENSUS SUR UN NOEUD, ET DISPOSITIF ÉLECTRONIQUE, SUPPORT DE STOCKAGE ET PRODUIT-PROGRAMME

(30) Priority: 20.04.2023 CN 202310458586
(43) Date of publication of application: 27.08.2025
(73) Proprietor: Tencent Technology (Shenzhen) Company Limited, Shenzhen, Guangdong 518057 (CN)
(72) Inventor: WANG, Neng, Shenzhen, Guangdong 518057 (CN)
(74) Representative: Gunzelmann, Rainer
(86) International application number: PCT/CN2023/132503
(87) International publication number: WO 2024/216959

(56) References cited:
- WO-A1-2017/123649
- CN-A- 110 012 100
- CN-A- 110 708 163
- CN-A- 111 654 395
- CN-A- 112 232 954
- US-A1- 2019 068 380
- US-A1- 2021 314 216

## Description

### RELATED APPLICATION

This application claims priority to Chinese Patent Application No. 202310458586.5, entitled "NODE CONSENSUS METHOD AND RELATED APPARATUS" filed on April 20, 2023.

### FIELD OF THE TECHNOLOGY

The present disclosure relates to the field of computer technologies, and provides a node consensus method and apparatus, an electronic device, a storage medium, and a program product.

### BACKGROUND OF THE DISCLOSURE

With continuous development of computer technologies, distributed systems are a computing system that is widely used at present, which are applied to various fields such as blockchains and ZooKeeper distributed service frameworks. During operations of the distributed systems, a consensus needs to be formed on pending messages from client devices.

In a related technology, a consensus process mainly includes three stages: a proposal stage, a prevote stage, and a precommit stage. Taking four consensus nodes as an example (which may include a master node and three slave nodes), the consensus process is as follows.

After receiving a consensus request from a client device, the master node generates a proposal, and then broadcasts the proposal to each slave node. After receiving the proposal, each slave node enters a prevote stage, generates a prevote vote (if the slave node does not receive a proposal within duration of a timer, the slave node generates a prevote vote for a null proposal) in the prevote stage, and broadcasts the prevote vote of the slave node to other nodes.

After receiving more than 2/3+1≈3 prevote votes, each node enters a precommit stage, generates a precommit vote, and broadcasts the own precommit vote to other nodes.

Each node enters a commit stage after receiving 2/3+1≈3 precommit votes. In the commit stage, if the consensus proposal is a null proposal, the proposal will not be committed.

CN110012100A discloses a block chain consensus method and device capable of optimizing bandwidth, applied to a block chain network, the method comprises the following steps: each consensus node in the block chain network receives a proposal and carries out pre- voting; each consensus node receives a pre- voting result sent by other consensus nodes in the block chain network; each consensus node judges the received pre-voting result to generate a presubmitting result; the pre-submission result is broadcast; each consensus node judges the pre-submission result and packages the proposal presubmission result achieving the consensus into a consensus proof; the proposal node of the next height submits a proposal and the consensus proof; and the next round of consensus is performed on the proposal and the consensus proof.

US2021314216A1 discloses a blockchain consensus method where nodes run repeated Honey Badger Byzantine Fault Tolerance rounds, moving proposals between sets using f+1 and 2f+1 vote thresholds until all proposals reach supermajority and a block is decided.

US20190068380A1 discloses a Practical Byzantine Fault Tolerance blockchain node-selection method where shareholder nodes perform equity-interest voting, reallocate "shares" between nodes, and then select consensus nodes based on post-vote share counts (optionally breaking ties by certificate time)

### SUMMARY

Embodiments of the present disclosure provide a node-based consensus processing method and a related apparatus, to improve consensus efficiency and improve performance of a distributed system.

According to a first aspect, the embodiments of the present disclosure provide a node-based consensus processing method, being executable by a first consensus node of a plurality of consensus nodes of a distributed system, the distributed system including at least one second consensus node different from the first consensus node, the method including:
obtaining a target proposal for consensus processing;
selecting, in response to a total proposal generation quantity reaching a first pre-set threshold, an abnormal node from the plurality of consensus nodes based on a plurality of proposal generation quantities each corresponding to one of the plurality of consensus nodes;
transmitting, for a primary voting stage on the target proposal, a first primary vote to the second consensus node, and receiving a second primary vote from the second consensus node, the first primary vote carrying an abnormal node identifier of the abnormal node;
transmitting, in response to a quantity of the at least one second primary vote carrying the abnormal node identifier reaching a second pre-set threshold and for a secondary voting stage on the target proposal, a first secondary vote to the second consensus node, and receiving a second secondary vote from the second consensus node, the first secondary vote carrying the abnormal node identifier; and
deleting, in response to a quantity of the at least one second secondary vote carrying the abnormal node identifier reaching a third pre-set threshold, the abnormal node from the plurality of consensus nodes.

According to a second aspect, the embodiments of the present disclosure provide a node-based consensus processing apparatus, being implemented on a first consensus node of a plurality of consensus nodes of a distributed system, the distributed system including at least one second consensus node different from the first consensus node, the apparatus including:
a screening unit, configured to obtain a target proposal for consensus processing, and select, in response to a total proposal generation quantity reaching a first pre-set threshold, an abnormal node from the plurality of consensus nodes based on a plurality of proposal generation quantities each corresponding to one of the plurality of consensus nodes;
a primary voting unit, configured to transmit, for a primary voting stage on the target proposal, a first primary vote to the second consensus node, and receive a second primary vote from the second consensus node, the first primary vote carrying an abnormal node identifier of the abnormal node;
a secondary voting unit, configured to transmit, in response to a quantity of the at least one second primary vote carrying the abnormal node identifier reaching a second pre-set threshold and for a secondary voting stage on the target proposal, a first secondary vote to the second consensus node, and receive a second secondary vote from the second consensus node, the first secondary vote carrying the abnormal node identifier; and
a node adjustment unit, configured to delete, in response to a quantity of the at least one second secondary vote carrying the abnormal node identifier reaching a third pre-set threshold, the abnormal node from the plurality of consensus nodes.

In a possible implementation, the screening unit is further configured to:
accumulate a proposal generation quantity corresponding to a master node by a pre-set increment, and update the total proposal generation quantity by adding the pre-set increment, when the plurality of consensus nodes reach a consensus on a non-null proposal generated by the master node during each round of consensus, where the master node is one of the plurality of consensus nodes.

In a possible implementation, the first consensus node locally records node proposal mapping information, and the node proposal mapping information includes: node identifiers of the plurality of consensus nodes and the plurality of proposal generation quantities each corresponding to one of the plurality of consensus nodes,
the screening unit is configured to determine the total proposal generation quantity in the following mode:
obtaining the plurality of proposal generation quantities each corresponding to one of the plurality of consensus nodes from the node proposal mapping information; and determining the total proposal generation quantity based on the obtained plurality of proposal generation quantities each corresponding to one of the plurality of consensus nodes.

In a possible implementation, during the selection of the abnormal node from the plurality of consensus nodes, the screening unit is specifically configured to:
select, from the plurality of consensus nodes, at least one consensus node with a proposal generation quantity being less than a fourth pre-set threshold; and
determine one of the at least one consensus node as the abnormal node.

In a possible implementation, during the determining of one of the at least one consensus node as the abnormal node, the screening unit is specifically configured to:
use, when the at least one consensus node is one consensus node, the one consensus node as the abnormal node, or
determine, when the at least one consensus node is more than one consensus node, one consensus node from the more than one consensus node based on proposal generation quantities respectively corresponding to the at least one consensus node, and use the determined one consensus node as the abnormal node.

In a possible implementation, after the deletion of the abnormal node from the plurality of consensus nodes, the screening unit is further configured to:
reset proposal generation quantities respectively corresponding to remaining consensus nodes in the distributed system; and
reset the total proposal generation quantity.

In a possible implementation, the screening unit is further configured to:
generate the target proposal for target transaction information after a consensus request from a client device for the target transaction information is obtained, when the first consensus node is a master node, or
obtain the target proposal from the master node when the first consensus node is a slave node.

In a possible implementation, during the obtaining of the target proposal from the master node, the screening unit is specifically configured to:
use a proposal from the master node as the target proposal when the proposal from the master node is received within pre-set duration starting from obtaining the consensus request from the client device by the master node, or
use a null proposal as the target proposal when no proposal from the master node is received within the pre-set duration starting from obtaining the consensus request from the client device by the master node.

According to a third aspect, the embodiments of the present disclosure provide an electronic device, including a processor and a memory, a computer program being stored in the memory, and the computer program, when executed by the processor, causing the processor to perform the operations of the node-based consensus processing method described above.

According to a fourth aspect, the embodiments of the present disclosure provide a computer-readable storage medium, including a computer program, when the computer program is run on an electronic device, the computer program being used for causing the electronic device to perform the operations of the node-based consensus processing method described above.

According to a fifth aspect, the embodiments of the present disclosure provide a computer program product, the program product including a computer program, the computer program being stored in a computer-readable storage medium, and a processor of an electronic device reading the computer program from the computer-readable storage medium and executing the computer program, to cause the electronic device to perform the operations of the node-based consensus processing method described above.

In embodiments of the present disclosure, when one of a plurality of consensus nodes in a distributed system obtains a target proposal, an abnormal node is selected or has been selected from the plurality of consensus nodes based on a plurality of proposal generation quantities respectively corresponding to the plurality of consensus nodes locally recorded by the consensus node in response to a total proposal generation quantity that is locally recorded by the consensus node reaching a total quantity threshold. Then the consensus node carries an abnormal node identifier of the abnormal node in a first vote in a prevote stage of the consensus node, and broadcasts the first vote of the consensus node to other consensus nodes among the plurality of consensus nodes except the consensus node. In addition, the consensus node further receives first votes transmitted by the other consensus nodes in the prevote stage. When the quantity of the received first votes carrying the abnormal node identifier reaches a first vote quantity threshold, the consensus node broadcasts a second vote in a precommit stage that carries the abnormal node identifier, and receives second votes in the precommit stage that are transmitted by the other consensus nodes. Then the consensus node determines that a consensus is reached on the target proposal, and deletes the abnormal node from the plurality of consensus nodes locally recorded by the consensus node, when the quantity of the received second votes carrying the abnormal node identifier reach a second vote quantity threshold.

In this way, the consensus nodes in the distributed system analyzes their historical proposal records, so that the abnormal node identifier is attached to the first votes and the second votes, and it is finally ensured through security guarantee by a Byzantine consensus protocol that all nodes unanimously remove the abnormal node from a consensus node list. Therefore, an entire consensus network can safely and correctly delete the abnormal node when encountering node failure, and it is finally ensured to a maximum extent that all nodes participating in a consensus are normal nodes, thereby greatly improving performance of an entire blockchain network.

Other features and advantages of the present disclosure are set forth in the subsequent specification, and in part become clear from the specification, or are learned by implementing the present disclosure. The objectives and other advantages of the present disclosure may be realized and attained by the structure particularly pointed out in the written specification, claims, and the accompanying drawings.

### BRIEF DESCRIPTION OF THE DRAWINGS

The accompanying drawings described herein are used to provide a further understanding of the present disclosure, and form part of the present disclosure. Exemplary embodiments of the present disclosure and descriptions thereof are used for explaining the present disclosure, and do not constitute any inappropriate limitation on the present disclosure. In the drawings:
FIG. 1 is a schematic structural diagram of a data sharing system according to all the embodiments of the present disclosure;
FIG. 2A is a schematic structural diagram of a blockchain according to all the embodiments of the present disclosure;
FIG. 2B is a schematic logic diagram of a block generation process according to all the embodiments of the present disclosure;
FIG. 3 is a schematic flowchart of a node-based consensus processing method according to all the embodiments of the present disclosure;
FIG. 4 is a schematic logic diagram of a node-based consensus process according to all the embodiments of the present disclosure;
FIG. 5 is a schematic diagram of a node proposal map according to all the embodiments of the present disclosure;
FIG. 6 is a schematic logic diagram of another node-based consensus process according to all the embodiments of the present disclosure;
FIG. 7 is a schematic diagram of initial node proposal maps according to all the embodiments of the present disclosure;
FIG. 8 is a schematic logic diagram of a first round of consensus process according to all the embodiments of the present disclosure;
FIG. 9 is a schematic diagram of the node proposal maps after the first round of consensus according to all the embodiments of the present disclosure;
FIG. 10 is a schematic diagram of a node proposal map in a multi-round consensus process according to all the embodiments of the present disclosure;
FIG. 11 is a schematic logic diagram of a fourth round of consensus process according to all the embodiments of the present disclosure;
FIG. 12A is a schematic logic diagram of one round of consensus process according to all the embodiments of the present disclosure;
FIG. 12B is a schematic diagram of the node proposal maps after deletion of an abnormal node according to all the embodiments of the present disclosure;
FIG. 13 is a schematic structural diagram of a node-based consensus processing apparatus according to all the embodiments of the present disclosure; and
FIG. 14 is a schematic structural diagram of an electronic device according to all the embodiments of the present disclosure.

### DESCRIPTION OF EMBODIMENTS

To make the objective, technical solutions and advantages of embodiments of the present disclosure clearer, the technical solutions in the present disclosure are clearly and completely described below with reference to the accompanying drawings in the embodiments of the present disclosure. Clearly, the described embodiments are some but not all of the embodiments of technical solutions of the present disclosure. All other embodiments obtained by a person of ordinary skill in the art based on the embodiments described in files of the present disclosure without creative efforts fall within the protection scope of technical solutions of the present disclosure.

The terms "first", "second", and the like in the embodiments of the present disclosure are used for distinguishing between different objects, not for describing a specific order. In addition, the terms "comprise/include" and "have" and any variations thereof are intended to cover a non-exclusive inclusion. For example, a process, method, system, product, or device that includes a series of operations or modules is not limited to the listed operations or modules, but exemplarily further includes operations or modules that are not listed, or exemplarily further includes other operations or modules that are inherent to these processes, methods, products, or devices.

"A plurality of' in the present disclosure may mean at least two, and may be, for example, two, three, or more. This is not limited according to the embodiments of the present disclosure. "And/or" is a description of the associated relationship of associated objects, representing that three relationships may exist. For example, A and/or B may be expressed as three instances: A exists alone, A and B coexist, or B exists alone. The character "/" generally indicates an "or" relationship between associated objects.

As described above, in a related technology, a consensus process may have three stages: a proposal stage, a prevote stage, and a precommit stage (different Byzantine consensus processes may have different names, but core processing procedures thereof are similar to the three stages). Using four consensus nodes as an example (which may include a master node and three slave nodes), the consensus process is as follows.

After receiving a consensus request from a client device, the master node generates a proposal according to the consensus request, and then broadcasts the proposal to each slave node. After receiving the proposal, each slave node enters a prevote stage, generates a prevote vote (a prevote vote for a null proposal is generated if the slave node receives no proposal within duration of a timer) in the prevote stage, and broadcasts the prevote vote of the slave node to other nodes.

After receiving 3 prevote votes, each node enters a precommit stage, generates a precommit vote, and broadcasts the precommit vote of the node to other nodes.

Each node enters a commit stage after receiving 3 precommit votes. In the commit stage, if a proposal on which a consensus is reached is a null proposal, the proposal is not committed.

To ensure fairness and security, after each round of consensus process is completed, a different node is usually switched to become the master node. However, if there is a faulty node among the consensus nodes, when the faulty node becomes the master node, the faulty node cannot generate a proposal and cannot transmit the proposal to other nodes for a consensus. Consequently, the other nodes need to cast null votes upon overtime of a timer to reach a null consensus, and then a normal node is switched to become the master node. The normal node generates a proposal and reaches a consensus. Clearly, when there is a faulty node in a distributed system, performance of the distributed system is significantly degraded.

In the embodiments of the present disclosure, when one of a plurality of consensus nodes in a distributed system obtains a target proposal and a total proposal generation quantity that is locally recorded by the consensus node reaches a total quantity threshold, an abnormal node is selected from the plurality of consensus nodes based on a plurality of proposal generation quantities respectively corresponding to the plurality of consensus nodes locally recorded by the consensus node. Then the consensus node carries an abnormal node identifier of the abnormal node in a first vote in a prevote stage of the consensus node, and broadcasts the first vote of the consensus node to other consensus nodes among the plurality of consensus nodes except the consensus node. In addition, the consensus node further receives first votes transmitted by the other consensus nodes in the prevote stage. When the quantity of the received first votes carrying the abnormal node identifier reaches a first vote quantity threshold, the consensus node broadcasts a second vote in a precommit stage that carries the abnormal node identifier, and receives second votes in the precommit stage that are transmitted by the other consensus nodes. Then the consensus node determines that a consensus is reached on the target proposal, and deletes the abnormal node from the plurality of consensus nodes locally recorded by the consensus node, when the quantity of the received second votes carrying the abnormal node identifier reaches a second vote quantity threshold. In this way, the consensus node in the distributed system analyzes a historical proposal record, so that the abnormal node identifier is attached to the first vote and the second vote, and it is finally ensured through security guarantee by a Byzantine consensus protocol that all nodes unanimously remove the abnormal node from a consensus node list. Therefore, an entire consensus network can safely and correctly delete the abnormal node when encountering node failure, and it is finally ensured to a maximum extent that all nodes participating in a consensus are normal nodes, thereby greatly improving performance of an entire blockchain network.

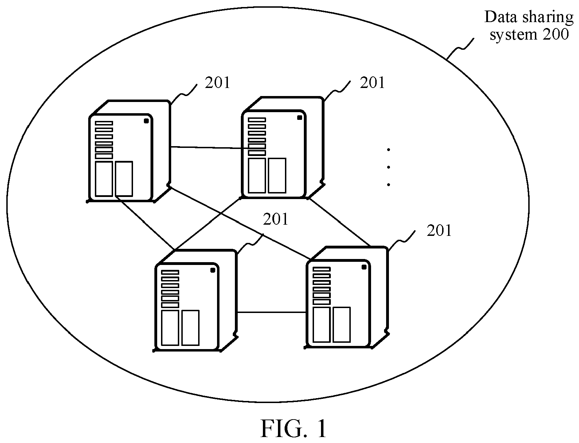

FIG. 1 is a schematic structural diagram of a data sharing system according to all the embodiments of the present disclosure. The data sharing system 200 refers to a system for data sharing between nodes and is also the distributed system in all the embodiments. The data sharing system may include a plurality of nodes 201, and the plurality of nodes 201 may refer to, for example, client devices in the data sharing system. During normal operation, each node 201 may receive input information, and maintain shared data in the data sharing system based on the received input information. To ensure information exchange in the data sharing system, an information connection may exist between the nodes in the data sharing system, and the nodes may transmit information through the information connection. For example, when any node in the data sharing system receives input information, other nodes in the data sharing system obtain the input information based on a consensus method, and store the input information as data in shared data, so that data stored on all nodes in the data sharing system is consistent.

Each node in the data sharing system has a corresponding node identifier, and each node in the data sharing system may store node identifiers of other nodes in the data sharing system, so as to subsequently broadcast a generated block to the other nodes in the data sharing system based on the node identifiers of the other nodes. Each node may maintain a node identifier list shown in the following table, and node names and the node identifiers are correspondingly stored in the node identifier list. The node identifiers may be Internet protocol (IP) addresses or any other information that can be used for identifying a node. Use the node identifiers being IP addresses as an example in Table 1 for description.

**Table 1 Node identifier list**

| Node name | Node identifier |
|---|---|
| Node 1 | 117.114.151.174 |
| Node 2 | 117.116.189.145 |
| ... | ... |
| Node N | 119.123.789.258 |

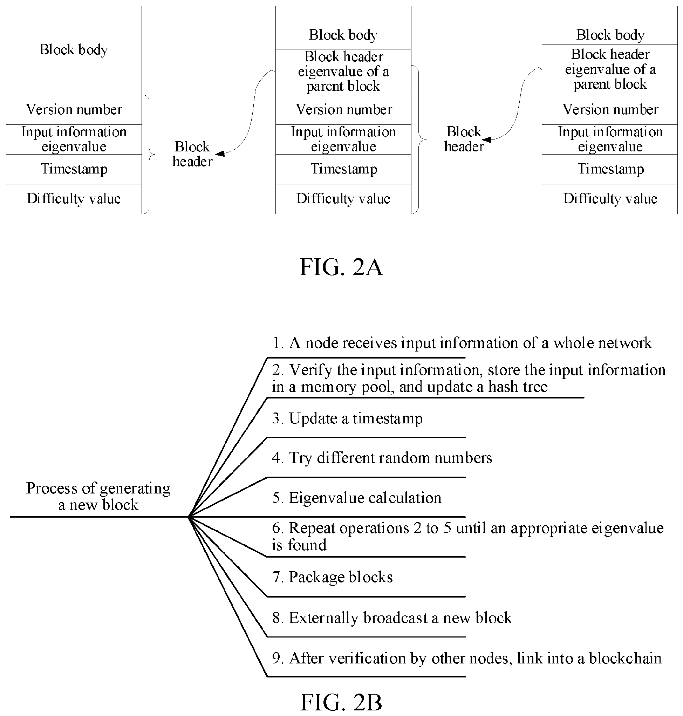

Each node in the data sharing system stores the same blockchain. FIG. 2A is a schematic structural diagram of a blockchain according to all the embodiments of the present disclosure. Referring to FIG. 2A, the blockchain includes a plurality of blocks. An earliest constructed block in the blockchain is referred to as a Genesis block. The Genesis block includes a block header and a block body. The block header stores an input information eigenvalue, a version number, a timestamp, and a difficulty value, and the block body stores input information. A next block following the Genesis block uses the Genesis block as a parent block. The next block also includes a block header and a block body. The block header of the next block stores an input information eigenvalue of the current block, a block header eigenvalue of the parent block, a version number, a timestamp, and a difficulty value. The rest blocks can be deduced by analogy. In this way, block data stored in each block in the blockchain is associated with block data stored in the parent block, thereby ensuring security of input information in the block.

FIG. 2B is a schematic logic diagram of a block generation process according to all the embodiments of the present disclosure. Referring to FIG. 2B, when each block in the blockchain is generated, upon receiving input information of a whole network, a node (for example, a current node) on which the blockchain is located verifies the input information. After completing the verification, the node stores the input information to a memory pool, and updates a hash tree used by the node for recording the input information. Then, the current node updates the timestamp to a time when the input information is received, tries different random numbers, and calculates an eigenvalue for multiple times, so that the calculated eigenvalue may satisfy the following formula: $SHA 256 \left(SHA256\left(version+prev_hash+merkle_root+ntime+nbits+x\right)\right) < TARGET$

where *SHA256* is an eigenvalue algorithm used for calculating an eigenvalue; *version* (the version number) is version information of a relevant block protocol in a blockchain; *prev_hash* is a block header eigenvalue of a parent block of a current block; *merkle_root* is an eigenvalue of the input information; *ntime* is an update time of the timestamp; *nbits* is current difficulty, is a fixed value within a period of time, and is determined again after a fixed period of time; *x* is a random number; and *TARGET* is an eigenvalue threshold, and the eigenvalue threshold may be determined based on *nbits.*

In this way, when the random number (*x*) satisfying the foregoing formula is obtained through calculation, the input information may be correspondingly stored, and a block header and a block body are generated, to obtain the current block. Then, the current node transmits, based on node identifiers of other nodes in a data sharing system, the newly generated block in a proposal (e.g., a block proposal to propose adding the newly generated block to the blockchain ), to the other nodes in the data sharing system in which the current node is located. The other nodes verify the newly generated block, and add, after completing the verification, the newly generated block to a blockchain stored by the other nodes.

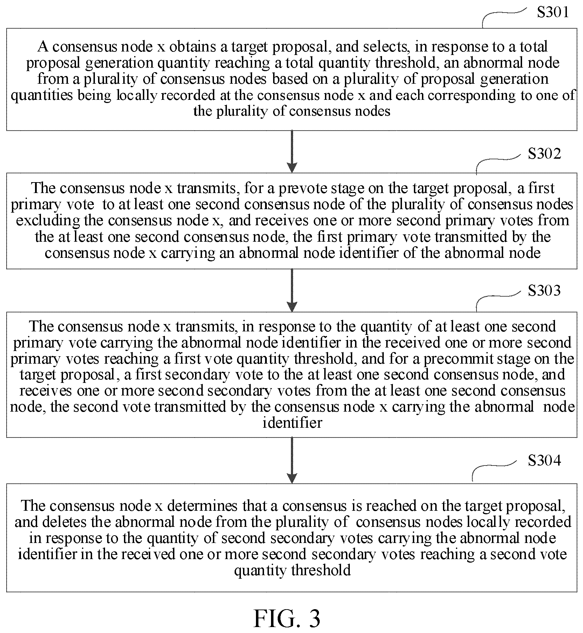

FIG. 3 is a schematic flowchart of a node-based consensus processing method according to all the embodiments of the present disclosure. The procedure is applied to a consensus node x. The consensus node x may be any one of a plurality of consensus nodes in a distributed system, and may be referred to as a first consensus node, the distributed system including at least second consensus node different from the first consensus node. The node-based consensus processing method includes the following specific operations S301-S304.

S301: the consensus node x obtains a target proposal for consensus processing, and selects, in response to a locally recorded total proposal generation quantity reaching a first pre-set threshold which is also referred to as a total quantity threshold, an abnormal node from the plurality of consensus nodes based on a plurality of proposal generation quantities, the plurality of proposal generation quantities being locally recorded at the consensus node x and each corresponding to one of the plurality of consensus nodes. The plurality of consensus nodes include the consensus node x.

For example, before operation S301 is performed, during each round of consensus, if the plurality of consensus nodes reach a consensus on a non-null proposal generated by a master node, at the consensus node x (similarly at the other consensus nodes in the distributed system), the proposal generation quantity corresponding to the master node is accumulated by a pre-set increment, and the total proposal generation quantity is updated by adding the pre-set increment. The master node is one of the plurality of consensus nodes.

That the plurality of consensus nodes may reach a consensus on a non-null proposal generated by a master node may refer to, for example, that the plurality of consensus nodes reach, in a precommit stage, the consensus on a proposal generated by the master node, and the proposal is a non-null proposal, or may refer to that the plurality of consensus nodes reach, in a commit stage, the consensus on the proposal generated by the master node (if the proposal on which the consensus is reached in the precommit stage is a null proposal, the consensus nodes do not commit the null proposal).

The total proposal generation quantity is a sum (e.g., weighted sum) of the plurality of proposal generation quantities respectively corresponding to the plurality of consensus nodes. The weighs of the plurality of proposal generation quantities may be determined according to the running time of each consensus node.

A pre-set value (the pre-set increment) is accumulated to the proposal generation quantity corresponding to the master node every time (each round of consensus). For example, during one round of consensus, if the plurality of consensus nodes reach a consensus on a non-null proposal generated by the master node, 1 is added to the proposal generation quantity corresponding to the master node (the pre-set value is 1). Correspondingly, 1 is added to the total proposal generation quantity.

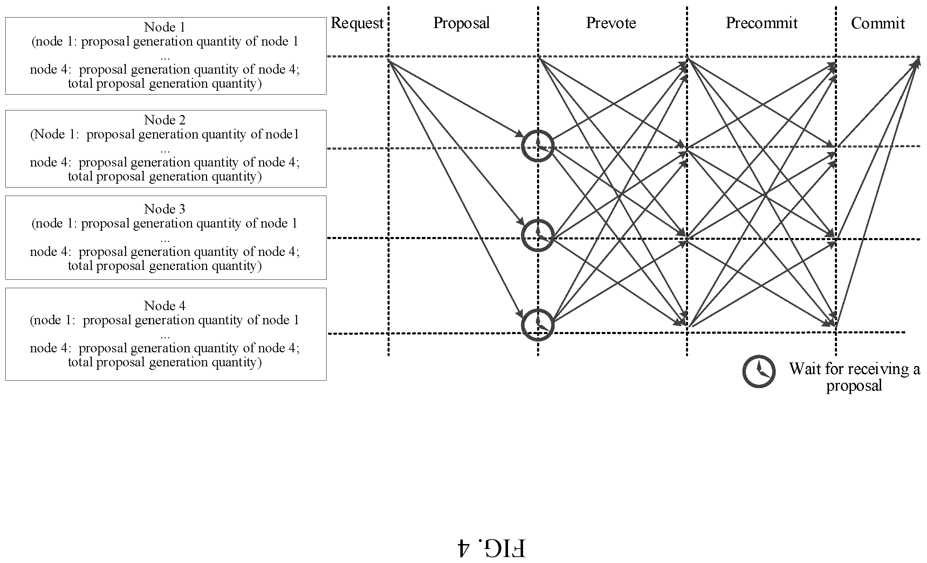

FIG. 4 is a schematic logic diagram of node-based consensus processing according to all the embodiments of the present disclosure. Referring to FIG. 4, a node 1, a node 2, a node 3, and a node 4 are used as an example to describe the node-based consensus processing e.g., to try to enable all nodes to reach an agreement on the state of the ledger and validate transactions. During one round of consensus process, the node 1 becomes the master node. After receiving a consensus request requesting a consensus for data (e.g., a block, a transaction list, a change of configuration, etc.) from a client device, the node 1 generates a proposal 1 proposing the data for consensus, broadcasts the proposal 1 to the node 2, the node 3, and the node 4, and enters a prevote stage. In the prevote stage, the node 1 generates a prevote vote voting on the validity of the data, e.g., voting on the validity and adherence to the pre-set block protocol of the block in case of the data being a block, and broadcasts the prevote vote of the node 1 to the node 2, the node 3, and the node 4. After receiving the proposal 1, each of the node 2, the node 3, and the node 4 enters the prevote stage, each generates a prevote vote voting on the validity of the data in the prevote stage, and broadcasts the generated prevote vote of the respective node to the other nodes. After each of the node 1, the node 2, the node 3, and the node 4 receives 2 × 4/3+1≈3 prevote votes, the respective node enters a precommit stage, generates a precommit vote on whether to commit the proposal 1 (e.g., committing the data to the blockchain), and broadcasts the precommit vote of the respective node to the other nodes. Each of the node 1, the node 2, the node 3, and the node 4 enters a commit stage after receiving 2 × 4/3+1 ≈3 precommit votes. In the commit stage, if the proposal 1 is not a null proposal, each of the node 1, the node 2, the node 3, and the node 4 commits the proposal 1. That is, the node 1, the node 2, the node 3, and the node 4 reach a consensus on the proposal 1. Therefore, 1 is added to the proposal generation quantity that corresponds to the node 1 and that is recorded by each node, and the total proposal generation quantity is updated by adding 1 thereto.

In all embodiments, the proposal generation quantity corresponding to each consensus node and the total proposal generation quantity corresponding to all the plurality of consensus nodes may be recorded in node proposal mapping information. That is, the node proposal mapping information, e.g., a node proposal mapping table, is locally recorded at each consensus node. The node proposal mapping table includes: node identifiers of the plurality of consensus nodes and the proposal generation quantities each corresponding to one of the plurality of consensus nodes.

Exemplarily, the node proposal mapping information is in a form of key-value pair. The node proposal mapping information may also be referred to as a node mapping map, where keys are the node identifiers of the plurality of consensus nodes, and values are the proposal generation quantities respectively corresponding to the consensus nodes. The proposal generation quantities are natural numbers, with an initial value being 0.

Each node identifier is used for uniquely identifying one consensus node. The node identifier may be represented by a serial number (ID), or may be represented by an Internet protocol (IP) address, but is not limited thereto.

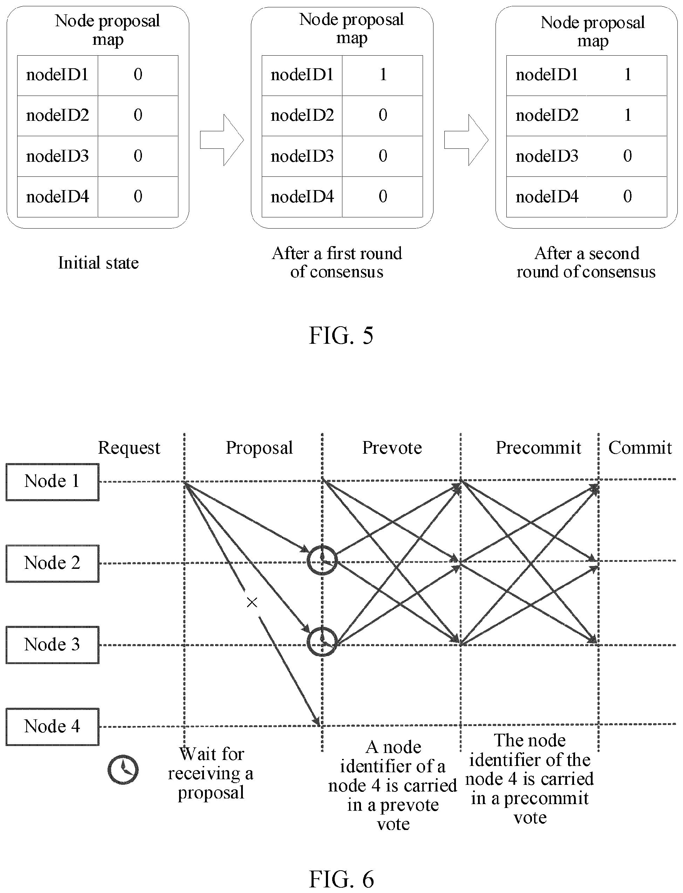

FIG. 5 is a schematic diagram of a node proposal map according to all the embodiments of the present disclosure. For example, referring to FIG. 5, in the node proposal map which is also the node mapping map, keys include node identifiers: nodeID1, nodeID2, nodeID3, and nodeID4, and values are proposal generation quantities corresponding to consensus nodes corresponding to the node identifiers. For example, nodeID1 is a node identifier of the node 1, nodeID2 is a node identifier of the node 2, nodeID3 is a node identifier of the node 3, and nodeID4 is a node identifier of the node 4. It is assumed that initial values of the values in the node proposal map are 0. During a first round of consensus, when the consensus nodes reach a consensus on a non-null proposal generated by the node 1, proposal generation quantities corresponding to the node 1, the node 2, the node 3, and the node 4 are 1, 0, 0, and 0 respectively, and thus the values are 1, 0, 0, and 0. During a second round of consensus, when the consensus nodes reach a consensus on a non-null proposal generated by the node 2, and proposal generation quantities corresponding to the node 1, the node 2, the node 3, and the node 4 are 1, 1, 0, and 0, the values are 1, 1, 0, and 0.

In all the embodiments of the present disclosure, the locally recorded total proposal generation quantity may be determined in the following mode: the proposal generation quantities corresponding to the consensus nodes are obtained from the node proposal mapping table; and the total proposal generation quantity is determined based on the obtained proposal generation quantities.

For example, referring to Fig. 5, after the second round of consensus, in the node proposal mapping table, the proposal generation quantities corresponding to the node 1, the node 2, the node 3, and the node 4 are 1, 1, 0, and 0. Based on the obtained proposal generation quantities, it is determined that the total proposal generation quantity is 2.

In all the embodiments of the present disclosure, when the target proposal is obtained, the following two cases may occur, but the embodiments are not limited thereto.

Case 1: when the consensus node x is the master node, the target proposal is generated for target transaction information after a consensus request from a client device for the target transaction information is obtained.

In all the embodiments of the present disclosure, the target transaction information is information on which the plurality of consensus nodes need to reach a consensus. The target transaction information includes, but is not limited to, an electronic money transaction record, a shared ledger operation record, a smart contract, or the like.

An example in which the consensus node x is the node 1 is used. Assuming that the node 1 is the master node, after obtaining the consensus request from the client device for the target transaction information, the node 1 generates the target proposal for the target transaction information.

Case 2: when the consensus node x is a slave node, the target proposal is obtained from the master node.

To ensure stable operation of the consensus method, each consensus node has a timer in the proposal stage to wait for generating a proposal by the master node. If the slave node receives, within the pre-set duration (the pre-set duration is timed by the timer), no proposal generated by the master node, to ensure that the consensus method can be continued and a next round of consensus is entered as soon as possible, the slave nodes vote on a null proposal.

In the embodiments of the present disclosure, to ensure that the master node can generate a proposal in time, the pre-set duration is generally set to be relatively large, for example, 30 seconds.

Specifically, if the slave node receives a proposal from the master node within pre-set duration starting from obtaining the consensus request from the client device by the master node, the proposal is used as the target proposal, or if the slave node receives no proposal from the master node within the pre-set duration starting from obtaining the consensus request from the client device by the master node, a null proposal is used as the target proposal.

An example in which the consensus node x is the node 2 is used. It is assumed that the node 1 is the master node, the node 2 is a slave node, and the pre-set duration is 30s. If the node 2 receives a proposal from the node 1 within the pre-set duration starting from obtaining the consensus request from the client device by the node 1, the proposal is used as the target proposal, or if no proposal from the node 1 is received within the pre-set duration starting from obtaining the consensus request from the client device by the node 1, a null proposal is used as the target proposal.

Specifically, during execution of operation S301, when the target proposal is obtained, the consensus node x may select or may have selected, from the plurality of consensus nodes, at least one consensus node with the proposal generation quantity thereof being less than a fourth pre-set threshold, e.g., a proposal generation threshold ,when the locally recorded total proposal generation quantity reaches the total quantity threshold, and then select or has selected one of the at least one consensus node as an abnormal node meeting the pre-set node anomaly condition. The proposal generation threshold is determined based on the proposal generation quantity corresponding to each consensus node.

For example, when the consensus node x selects one of the at least one consensus node as the abnormal node meeting the pre-set node anomaly condition, the following mode may be used, but modes are not limited thereto:
when the at least one consensus node is one consensus node, the consensus node x uses the one consensus node as the abnormal node meeting the pre-set node anomaly condition, or
when the at least one consensus node is more than one consensus node, the consensus node x determines one consensus node from the more than one consensus node based on at least one proposal generation quantity corresponding to the at least one consensus node, and uses the determined one consensus node as the abnormal node meeting the pre-set node anomaly condition.

The proposal generation threshold may be determined based on an average value of the proposal generation quantities corresponding to the consensus nodes. For example, 1/10 of an average value of the proposal generation quantities (the total proposal generation quantity, for example, equal to a total quantity threshold) corresponding to all consensus nodes in the distributed system may be used as the proposal generation threshold. In the embodiments of the present disclosure, an average value of the proposal generation quantities corresponding to all consensus nodes in the distributed system is only used as an example. In an actual application process, another statistical value such as a median of the proposal generation quantities of all consensus nodes in the distributed system may alternatively be used.

When one consensus node is determined from the plurality of selected consensus nodes, a consensus node with the smallest proposal generation quantity may be used as the determined consensus node. Alternatively, any one of the plurality of selected consensus nodes may be used as the determined consensus node. This is not limited, and details are not described herein.

An example in which the total quantity threshold is 1000 is used. Because each consensus node records cases of proposals generated for the last 1000 times in the distributed system, when a node of the plurality of consensus nodes becomes the master node, the other nodes analyze the cases of proposals generated for the last 1000 times. Under normal conditions, in a record of proposals generated for the last 1000 times, the proposal generation quantity corresponding to each consensus node is to be average. If in a record of proposals generated for the last 1000 times, the proposal generation quantity corresponding to a consensus node is less than the proposal generation threshold (for example, 1/10 of the average value of the proposal generation quantities), the node is an abnormal node (also referred to as a faulty node). The consensus node may process the abnormal node, e.g., removing the abnormal node from the consensus process, directly after determining the abnormal node, or according to at least one voting result obtained through at least one voting stage, to ensure that consensus nodes participating in the consensus are all normal nodes.

For an example, the plurality of consensus nodes are four consensus nodes. Among the proposals generated in the last 1000 times, if a consensus node has normal system resources and operates normally, the proposal generation quantity corresponding to this node is to be close to 250. If a consensus node generates proposals for only 25 times among the proposals generated in the last 1000 times, other nodes can determine that the consensus node is an abnormal node. The abnormal node may be subjected to abnormal operation caused by downtime, network fault, or the like, because if the abnormal node is a node that has normal system resources and operates normally, the quantity of proposal generations corresponding to the abnormal node among historical proposal generations for the last 1000 times is not only 1/10 of the average value of the proposal generation quantities. Therefore, when a proposal is generated for a 1001^{st} time, the consensus nodes may vote based on the historical proposals to remove an abnormal node with a quantity of proposal generations among the proposal generations for the last 1000 times being less than 1/10 of the average value of the proposal generation quantities.

For example, the node 1 is the master node, the node 2, the node 3, and the node 4 are all slave nodes, the total quantity threshold is 1000, and the proposal generation threshold is 1/10 of the average value of the proposal generation quantities, and is 1000/4×1/10=25. The proposal generation quantities corresponding to the node 1, the node 2, the node 3, and the node 4 are, for example, 340, 320, 320, and 20. The node 1 is used as an example. When the node 1 obtains the target proposal, and the total proposal generation quantity recorded locally by the node 1 reaches 1000, the node 1 selects at least one consensus node with a proposal generation quantity being less than 25 from the consensus nodes, and the selected consensus node is the node 4. In this case, the node 1 uses the node 4 as an abnormal node meeting the pre-set node anomaly condition.

For another example, the node 1 is the master node, the node 2, the node 3, and the node 4 are all slave nodes, the total quantity threshold is 1000, and the proposal generation threshold is 1/10 of the average value of the proposal generation quantities, and is 1000/4×1/10=25. The proposal generation quantities of the node 1, the node 2, the node 3, and the node 4 are, for example, 476, 480, 24, and 20. The node 1 is used as an example. When the node 1 obtains the target proposal, and the total proposal generation quantity recorded locally by the node 1 reaches 1000, the node 1 selects at least one consensus node with a proposal generation quantity being less than 25 from the consensus nodes, and the selected consensus nodes include the node 3 and the node 4. In this case, the consensus node 1 obtains, from the node 3 and the node 4 based on the proposal generation quantities respectively corresponding to the node 3 and the node 4, a consensus node with a smaller proposal generation quantity: the node 4, as a determined consensus node, and the node 4 is used as an abnormal node meeting the pre-set node anomaly condition.

Each of the plurality of consensus nodes may obtain the node proposal generation quantities corresponding to the plurality of consensus nodes from the locally recorded node proposal map, then select consensus nodes with a value less than 1/10 of an average value of the proposal generation quantities from the plurality of consensus nodes, and then determine an abnormal node from the selected consensus nodes.

S302: The consensus node x transmits, for a primary voting stage on the target proposal, a first primary vote to the at least one second consensus node, and receives one or more second primary votes from the at least one second consensus node. The first primary vote transmitted by the consensus node x carries an abnormal node identifier of the abnormal node. The primary voting stage may be a prevote stage. The first primary vote and the one or more second primary votes are different first votes identified by signatures of the consensus node x and the at least one second consensus node, as they are votes in a first voting stage.

In all the embodiments of the present disclosure, the first votes in the prevote stage may also be referred to as prevote votes identified by a type of "prevote" contained in the first votes. Each of the plurality of consensus nodes generates a prevote vote e.g., a voting result or voting data result on the validity and adherence to the pre-set block protocol of the block(or a hash value of the block) in the target proposal, in the prevote stage, and may add an id of a node that is determined by the respective consensus node to be removed, namely an abnormal node determined according to the criterion in S301 or other criteria, to vote content of the prevote vote. Then, each consensus node broadcasts the prevote vote generated by the consensus node to other nodes among the plurality of consensus nodes, and receives prevote votes transmitted by the other nodes. That the consensus node x generates and broadcasts the prevote vote and that the consensus node x receives the prevote votes transmitted by the other nodes is not limited in the embodiments of the present disclosure are in an order without limitation, and may be performed in parallel.

FIG. 6 is a schematic logic diagram of another example of node-based consensus process according to the embodiments of the present disclosure. An example in which the consensus node x is the node 1 is used. Referring to FIG. 6, it is assumed that the abnormal node determined in operation S301 is the node 4. In the prevote stage of a Byzantine consensus process, the node 1 generates a prevote vote, and the prevote vote carries the node identifier of the node 4: nodeID4. Then, the node 1 broadcasts the prevote vote generated by the node 1 to the node 2, the node 3, and the node 4, and receives prevote votes broadcasted by the node 2, the node 3, and the node 4. That the node 1 generates and broadcasts the prevote vote and that the node receives the prevote votes broadcasted by the other nodes are in an order without limitation in the embodiments of the present disclosure, and may be performed in parallel.

S303: The consensus node x transmits, in response to the quantity of at least one second primary vote carrying the abnormal node identifier among the received one or more second primary votes reaching a second pre-set threshold which is also referred to as a first vote quantity threshold, and for a secondary voting stage on the target proposal, a first secondary vote to the at least one second consensus node, and receives one or more second secondary votes from the at least one second consensus node. The first secondary vote transmitted by the consensus node x carries the abnormal node identifier. The secondary voting stage may be a precommit stage. The first secondary vote and the one or more second secondary votes are different second votes identified by the signatures of the first consensus node and the at least one second consensus node, as they are votes in a second voting stage. Second votes from different consensus nodes may be. Although the terms "primary" and secondary may be used herein, these terms are only used to distinguish one stage from another, and should not be construed as limitations to the superiority or inferiority of the stages.

In the embodiments of the present disclosure, the second vote (referring to the second vote transmitted by the consensus node x and/or the second vote received by the consensus node x) in the precommit stage may also be referred to as a precommit vote e.g., a voting result or voting data result on whether to commit the block (or the hash value of the block) to the blockchain, identified by a type of "precommit" contained in the second vote. The first vote quantity threshold may be 2n/3+1, where n represents the quantity of the plurality of consensus nodes. When the value of 2n/3+1 is not an integer, rounding down may be used to obtain the first vote quantity threshold. For example, when there are four consensus nodes, the first vote quantity threshold is 2n/3+1, and the consensus node x enters the precommit stage when the quantity of received first votes carrying the abnormal node identifier reaches 3.

If the first votes received by the consensus node x may include the first vote generated by the consensus node x, the first vote quantity threshold may be 2n/3+1. If the first votes received by the consensus node x may alternatively not include the first vote generated by the consensus node x, the first vote quantity threshold may be 2n/3. This is not limited.

If each of the plurality of consensus nodes receives at least 2n/3+1 prevote votes carrying the same node identifier (e.g., the abnormal node identifier determined in operation S301) in the second stage (prevote stage) of the consensus process, in the third stage (precommit stage) of the consensus process, the respective consensus node generates a precommit vote, adds an id of a node needing to be removed, namely the abnormal node identifier, to vote content of the precommit vote, then broadcasts the precommit vote generated by the respective consensus node to other nodes among the plurality of consensus nodes, and receives precommit votes transmitted by the other nodes. An example in which the consensus node x is the node 1 is used. Referring to FIG. 6, it is assumed that the abnormal node determined in operation S301 is the node 4. In the prevote stage of the Byzantine consensus process, when the node 1 receives prevote votes from the node 2, the node 3, and the node 4, and the prevote votes from the node 2, the node 3, and the node 4 all carry nodeID4, it is determined that the quantity of received first votes carrying nodeID4 reaches 2. Then, the node 1 transmits a precommit vote to the node 2, the node 3, and the node 4, where the precommit vote carries nodeID4, and the node receives precommit votes transmitted by the node 2, the node 3, and the node 4. Because the node 4 is abnormal, the node cannot participate in voting, that is, the node cannot receive or transmit a prevote vote and a precommit vote. Therefore, FIG. 6 does not show a process of transmitting a vote to the node 4.

In the embodiments of the present disclosure, if the quantity of first votes carrying the abnormal node identifier among the received first votes does not reach the first vote quantity threshold, and the quantity of the received first votes reaches the first vote quantity threshold, the consensus node x may directly enter the precommit stage, and generate a precommit vote carrying no node identifier. That the consensus node x generates and broadcasts the precommit vote and that the consensus node x receives the precommit votes transmitted by the other nodes are in an order not limited in the embodiments of the present disclosure, and may be performed in parallel.

S304: The consensus node x determines that a consensus is reached on the target proposal, and deletes the abnormal node from the plurality of consensus nodes locally recorded in response to the quantity of at least one second secondary vote carrying the abnormal node identifier in the received one or more second secondary votes reaches a third pre-set threshold which is also referred to as a second vote quantity threshold.

The second vote quantity threshold may be the same as or different from the first vote quantity threshold. Herein, an example in which the second vote quantity threshold is the same as the first vote quantity threshold is used for description.

If each of the plurality of consensus nodes receives at least 2n/3+1 precommit votes carrying the same node identifier (namely the abnormal node identifier) in the third stage (precommit stage), it is determined that a consensus is reached on the target proposal, and that the abnormal node can be deleted from the plurality of consensus nodes. Further, if the target proposal on which a consensus is reached is a null proposal, the target proposal is not committed, or if the target proposal on which a consensus is reached is a non-null proposal, the target proposal is committed.

The consensus node x being the node 1 is still used as an example. Referring to FIG. 6, it is assumed that the abnormal node determined in operation S301 is the node 4, and in the precommit stage of the Byzantine consensus process, the second vote quantity threshold is 3. When the node 1 receives precommit votes from the node 2, the node 3, and the node 4, and the precommit votes from the node 2, the node 3, and the node 4 all carry nodeID4, it is determined that the quantity of received first votes carrying nodeID4 reaches 3. Then, the node 1 determines that a consensus is reached on the target proposal, and deletes nodeID4 from locally recorded consensus nodes. The consensus nodes after the deletion include: the node 1, the node 2, and the node 3.

Further, after a node is deleted from or added to the locally recorded node proposal map, the consensus node resets the proposal generation quantities respectively corresponding to locally recorded remaining consensus nodes in the distributed system, and resets the locally recorded total proposal generation quantity.

The consensus node resets the proposal generation quantities respectively corresponding to locally recorded remaining consensus nodes in the distributed system and the total proposal generation quantity to an initial value. For example, the initial value is 0.

The consensus node x being the node 1 is still used as an example. Referring to FIG. 6, for the node proposal map locally recorded by the node 1, the node identifier of the node 4 and the corresponding value are deleted from the node proposal map, and the proposal generation quantities respectively corresponding to the node 1, the node 2, and the node 3 that are recorded in the node proposal map are reset to 0. Because the sum of the proposal generation quantities corresponding to the consensus nodes is the total proposal generation quantity, the total proposal generation quantity is also reset to 0.

In the embodiments of the present disclosure, by analysis of the historical proposal record, an id of a node that needs to be removed (namely the abnormal node identifier) is attached to at least one node vote (e.g., the prevote votes and/or the precommit vote). Finally, through security guarantee by the Byzantine consensus protocol, it is ensured that all nodes unanimously remove the node that needs to be removed from a consensus. In this way, an entire consensus network can safely and correctly remove the faulty node when encountering node failure, and it is finally ensured to a maximum extent that all nodes participating in a consensus are normal nodes, thereby greatly improving performance of an entire blockchain network.

Description of the above embodiments is provided below with reference to a specific embodiment.

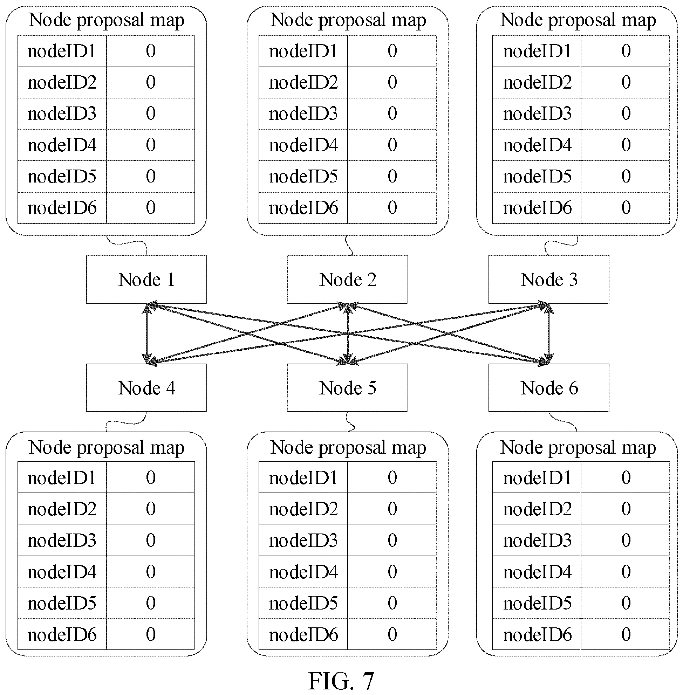

FIG. 7 is a schematic diagram of initial node proposal maps according to all the embodiments of the present disclosure. Referring to FIG. 7, the distributed system includes six consensus nodes, and the six consensus nodes are a node 1 to a node 6. Each of the node 1 to the node 6 has a node proposal map recorded locally. Each node maintains its node proposal map, and the node proposal map includes node IDs of the node 1 to the node 6. A value corresponding to each node ID is initialized to be 0.

It is assumed that the node 4 becomes the abnormal node because of downtime or for another reason, and the remaining five nodes are all normal nodes.

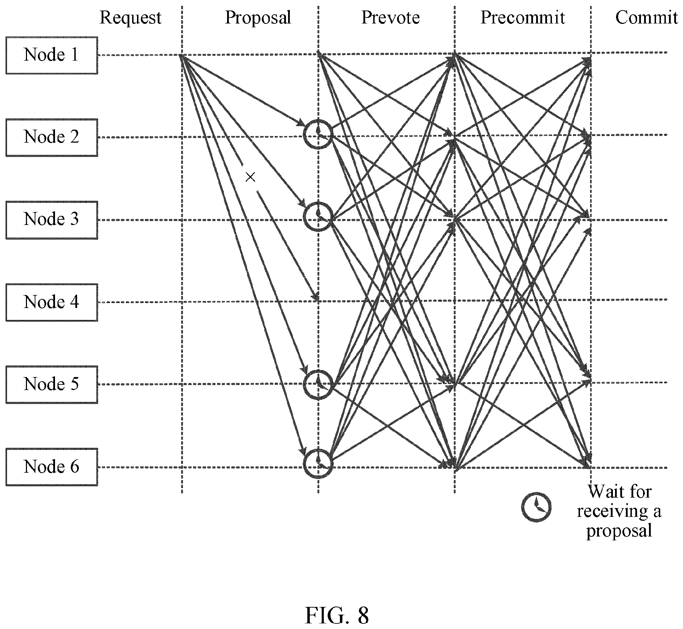

FIG. 8 is a schematic logic diagram of a first round of consensus process according to all the embodiments of the present disclosure. During the first round of consensus, the node 1 becomes the master node. Referring to FIG. 8, the node 1 is a normal node. Therefore, after the node 1 receives a consensus request from a client device, the node 1 generates a proposal, broadcasts the proposal to the node 2 to the node 6, generates a prevote vote in a prevote stage, and broadcasts the prevote vote of the node to the node 2 to the node 6.

The node 2, the node 3, the node 5, and the node 6 are all normal nodes. Therefore, after receiving the proposal from the node 1, each of the node 2, the node 3, the node 5, and the node 6 generates a prevote vote in the prevote stage, and broadcasts the prevote vote of the node to other nodes.

After each of the node 1, the node 2, the node 3, the node 5, and the node 6 receives 2×6/3+1=5 prevote votes, in the precommit stage, the node generates a precommit vote, and broadcasts the precommit vote of the node to other nodes.

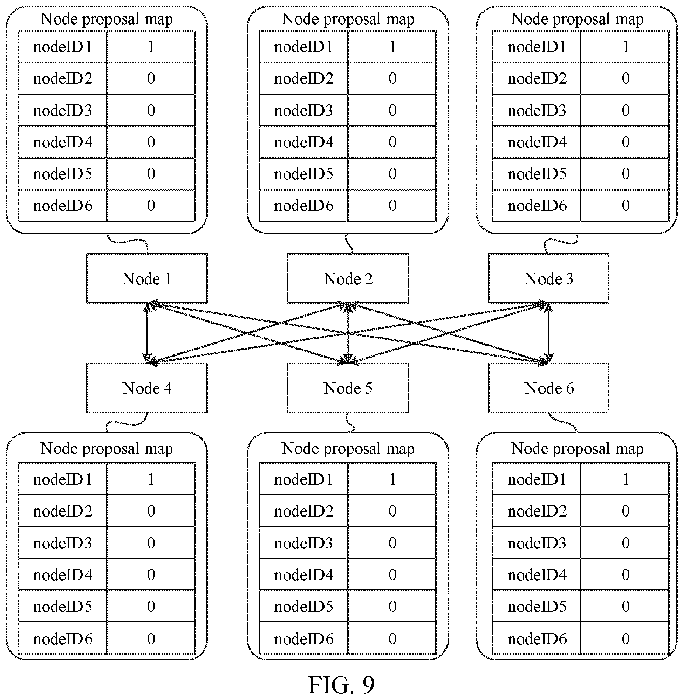

After receiving received 2×6/3+1=5 precommit votes, each of the node 1, the node 2, the node 3, the node 5, and the node 6 determines that a consensus is reached on the proposal, and commits the proposal when the proposal is not a null proposal. After the proposal is committed, the node 1 to the node 6, in node proposal maps maintained by the nodes respectively, add 1 to a value corresponding a key being a node id of the node 1, that is, 1 is added to the proposal generation quantity corresponding to the node 1. FIG. 9 is a schematic diagram of the node proposal maps after the first round of consensus according to all the embodiments of the present disclosure. Referring to FIG. 9, after a consensus is finally reached, in the node proposal map of each node, values of the node ids are as follows: proposal generation quantities respectively corresponding to the node 1 to the node 6 are 1, 0, 0, 0, 0, and 0.

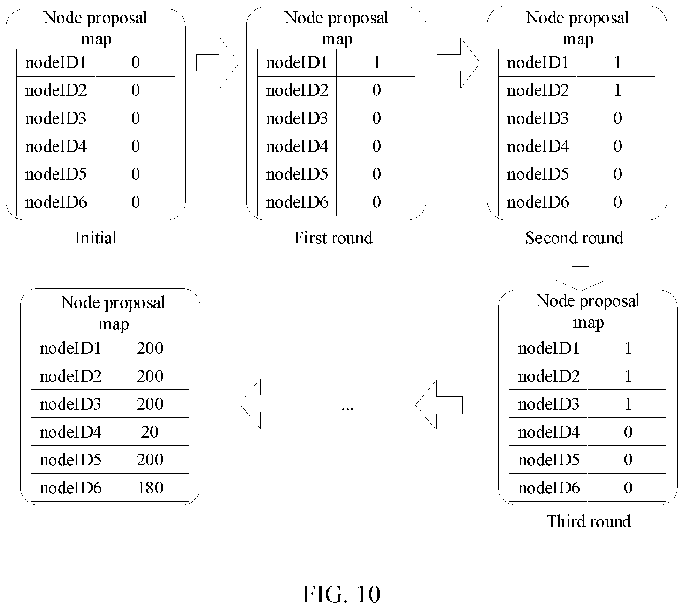

During a second round of consensus, the node 2 becomes the master node. After the node 2 generates a proposal, the node 1 to the node 6 reach a consensus on the proposal generated by the node 2. Since the process of consensus on the proposal generated by the node 2 is the same/similar as the process of consensus on the proposal generated by the node 1, details are not described herein. FIG. 10 is a schematic diagram of a node proposal map in a multi-round consensus process according to all the embodiments of the present disclosure. Referring to FIG. 10, after a consensus is finally reached, in a node proposal map of each node, values of node ids are as follows: proposal generation quantities respectively corresponding to the node 1 to the node 6 are 1, 1, 0, 0, 0, and 0.

During a third round of consensus, the node 3 becomes the master node. After the node 3 generates a proposal, the node 1 to the node 6 reach a consensus on the proposal generated by the node 3. Because the process of consensus on the proposal generated by the node 3 is the same/similar as the process of consensus on the proposal generated by the node 1 or 2, details are not described herein. Referring to FIG. 10, after a consensus is finally reached, in a node proposal map of each node, values of node ids are as follows: proposal generation quantities respectively corresponding to the node 1 to the node 6 are 1, 1, 1, 0, 0, and 0.

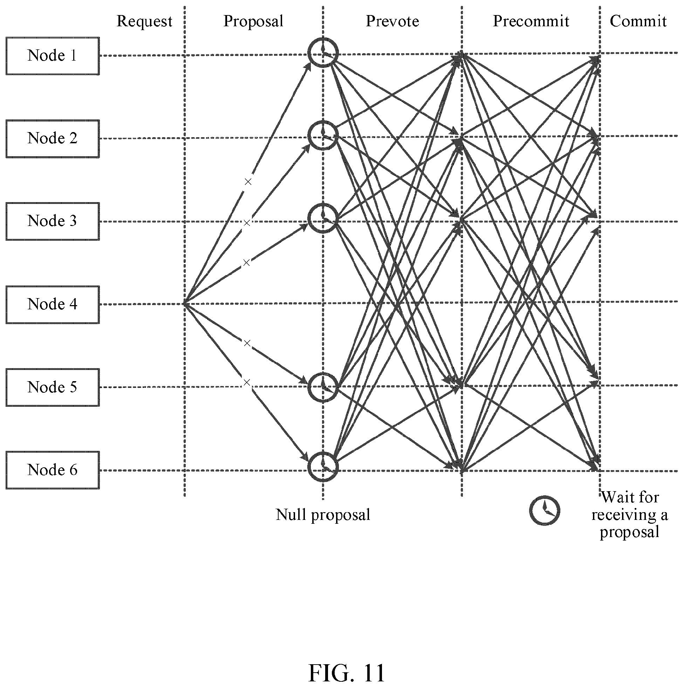

FIG. 11 is a schematic logic diagram of a fourth round of consensus process according to all the embodiments of the present disclosure. Referring to FIG. 11, during a fourth round of consensus, the node 4 becomes the master node. Because the node 4 is a faulty node, the node cannot generate a proposal. Therefore, starting from obtaining the consensus request from the client device by the node 4, the node 1, the node 2, the node 3, the node 5, and the node 6 each start a timer during waiting for generation of a proposal by the node 4. If no proposal generated by the node 4 is received within the pre-set duration, the node 1, the node 2, the node 3, the node 5, and the node 6 generate votes on a null proposal, and reach a consensus on the null proposal.

Because the node 1, the node 2, the node 3, the node 5, and the node 6 receive no proposal, finally no operation of adding 1 to the value corresponding to a key being a node id of the node 4 is performed in each node proposal map at the respective nodes. After a consensus is reached on a null proposal, the null proposal is not committed to a blockchain, but another node different from the node 4 is switched to continue to generate a new proposal. Therefore, after the node 4 generates no proposal, and finally other nodes vote on a null proposal upon overtime to reach a consensus, the value of the node 4 in each node proposal map will not change. In the node proposal map of each node, values of node ids are as follows: proposal generation quantities respectively corresponding to the node 1 to the node 6 are 1, 1, 1, 0, 0, and 0.

With the progress of the consensus, the values of the node 1, the node 2, the node 3, the node 5, and the node 6 continue to increase, but the node 4 is a faulty node. Therefore, the value of the node 4 does not increase or increases slowly because of network and machine performance. When the sum of the values of all nodes reaches 1000, the value of the node 4 does not reach 1/10 of an average value, namely 166, of the proposal generation quantities, namely 16. It is assumed that currently in a node proposal map of each node, values of node ids are as follows: 200, 200, 200, 15, 200, and 185.

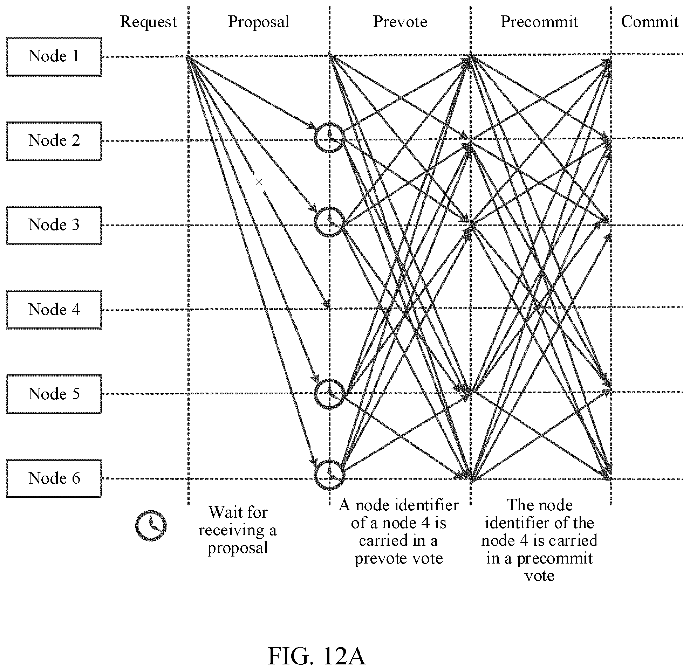

FIG. 12A is a schematic logic diagram of one round of consensus process according to all the embodiments of the present disclosure. Referring to FIG. 12A, when the target proposal is obtained, each node may select or may have selected a consensus node with a proposal generation quantity being less than 16 from the plurality of consensus nodes as an abnormal node, when a sum of values corresponding to node ids in a locally recorded node proposal map reaches 1000 (that is, a total proposal generation quantity reaches 1000). The abnormal node is a node 4. Then, each node generates a prevote vote, and the prevote vote carries nodeID4. The respective node broadcasts the prevote vote generated by the respective node to other nodes, and receives prevote votes transmitted by the other nodes. Each node generates a precommit vote when receiving no less than 2×6/3+1=5 precommit votes carrying the same node identifier, and the precommit vote carries nodeID4. The respective node broadcasts the precommit vote generated by the respective node to other nodes, and receives precommit votes transmitted by the other nodes. When each node receives no less than 2×6/3+1=5 precommit votes carrying the same node identifier, it is determined that a consensus is reached on the target proposal, and the node 4 is deleted from the plurality of consensus nodes. In the embodiments of the present disclosure, since the node 4 cannot receive or transmit a vote, FIG. 12A does not show a process in which each node transmits a vote to the node 4.

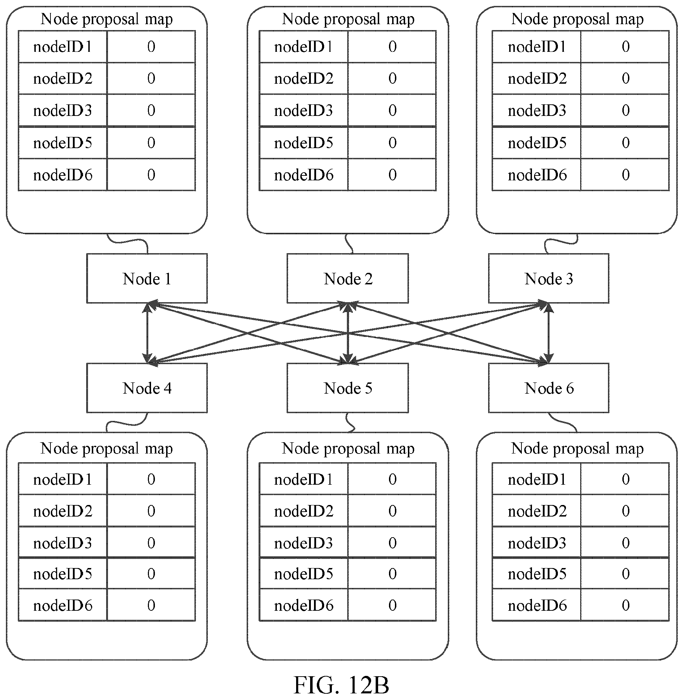

FIG. 12B is a schematic diagram of the node proposal maps after deletion of the abnormal node according to the embodiments of the present disclosure. Further, referring to FIG. 12B, for the node proposal map locally recorded by each node, the node identifier of the node 4 and the corresponding value are deleted from the node proposal map, and the proposal generation quantities respectively corresponding to the node 1, the node 2, the node 3, the node 5, and the node 6 that are recorded in the node proposal map are reset to 0. Because the sum of the proposal generation quantities respectively corresponding to the plurality of consensus nodes is the total proposal generation quantity, the total proposal generation quantity is also reset to 0.

By the foregoing implementation, when a node becomes a faulty node, after consensus for several times, a value of the node does not increase. However, other nodes are normal nodes, and the other nodes generate proposals, causing the values to increase. After proposals are generated for 1000 times, the value of the faulty node is very low. If the value is less than 1/10 of an average value of the proposal generation quantities, it may be basically determined that the node is faulty, and voting is performed to remove the node from consensus nodes, to ensure that nodes participating in the consensus are all normal nodes, so that performance of the blockchain is restored to normal.

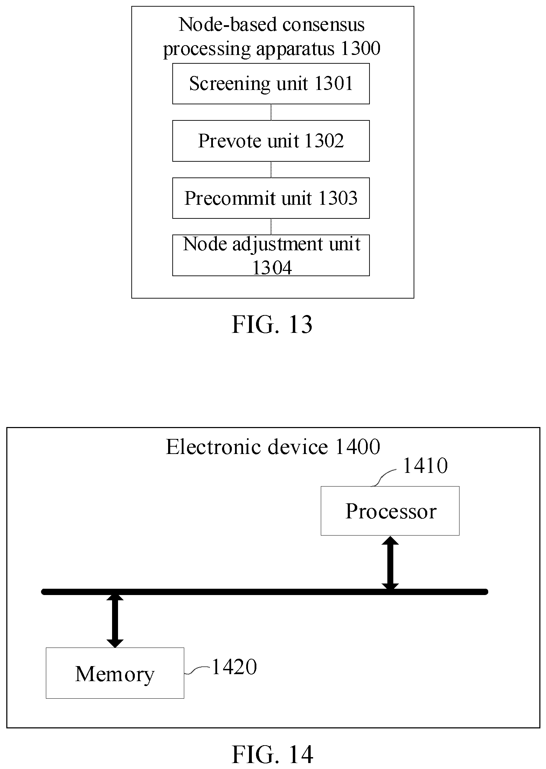

Based on the same inventive concept, the embodiments of the present disclosure provide a node-based consensus processing apparatus. FIG. 13 is a schematic structural diagram of a node-based consensus processing apparatus 1300 being implemented on a first consensus node of a plurality of consensus nodes of a distributed system, the distributed system comprising at least one second consensus node different from the first consensus node, the apparatus, which may include:
a screening unit 1301, configured to obtain a target proposal for consensus processing, and select, in response to a locally recorded total proposal generation quantity reaching a first pre-set threshold which is also referred to as a total quantity threshold, an abnormal node from the plurality of consensus nodes based on a plurality of proposal generation quantities, the plurality of proposal generation quantities being locally recorded at the first consensus node and each corresponding to one of the plurality of consensus nodes;
a prevote unit 1302, configured to transmit, for a primary voting stage on the target proposal, a first primary vote to the at least one second consensus node, and receive one or more second primary votes from the at least one second consensus node, the first primary vote transmitted by the first consensus node carrying an abnormal node identifier of the abnormal node, the primary voting stage being a prevote stage, and the first primary vote and the one or more second primary votes being different first votes identified by signatures of the first consensus node and the at least one second consensus node;
a precommit unit 1303, configured to transmit, in response to the quantity of at least one second primary vote carrying the abnormal node identifier among the received one or more second primary votes reaching a second pre-set threshold which is also referred to as a first vote quantity threshold, and for a secondary voting stage on the target proposal, a first secondary vote to the at least one second consensus node, and receive one or more second secondary votes from the at least one second consensus node, the first secondary vote transmitted by the first consensus node carrying the abnormal node identifier, the secondary voting stage being a precommit stage, and the first secondary vote and the one or more second secondary votes being different second votes identified by the signatures of the first consensus node and the at least one second consensus node; and
a node adjustment unit 1304, configured to determine that a consensus is reached on the target proposal, and delete the abnormal node from the plurality of consensus nodes that are locally recorded in response to the quantity of at least one second secondary vote carrying the abnormal node identifier in the received one or more second secondary votes reaching a third pre-set threshold which is also referred to as a second vote quantity threshold.

In a possible implementation, before the selection, based on the plurality of proposal generation quantities, of the abnormal node from the plurality of consensus nodes, the screening unit 1301 is further configured to:
accumulate a proposal generation quantity corresponding to a master node by a pre-set increment, and update the total proposal generation quantity by adding the pre-set increment, when the plurality of consensus nodes reach a consensus on a non-null proposal generated by the master node during each round of consensus, where the master node is one of the plurality of consensus nodes.

In a possible implementation, the first consensus node locally records node proposal mapping information, and the node proposal mapping information includes: node identifiers of the plurality of consensus nodes and the plurality of proposal generation quantities each corresponding to one of the plurality of consensus nodes,
the screening unit 1301 is configured to determine the locally recorded total proposal generation quantity in the following mode:
obtaining the plurality of proposal generation quantities each corresponding to one of the plurality of consensus nodes from the node proposal mapping information; and determining the total proposal generation quantity based on the obtained plurality of proposal generation quantities each corresponding to one of the plurality of consensus nodes.

In a possible implementation, during the selection, based on the plurality of proposal generation quantities respectively corresponding to the plurality of locally recorded consensus nodes in the distributed system, of the abnormal node meeting the pre-set node anomaly condition from the plurality of consensus nodes, the screening unit 1301 is specifically configured to:
select, from the plurality of consensus nodes, at least one consensus node with a proposal generation quantity being less than a fourth pre-set threshold which is a proposal generation threshold; and
determine one of the at least one consensus node as the abnormal node meeting the pre-set node anomaly condition.

In a possible implementation, during the determining of one of the at least one consensus node as the abnormal node meeting the pre-set node anomaly condition, the screening unit 1301 is specifically configured to:
use, when the at least one consensus node is one consensus node, the one consensus node as the abnormal node meeting the pre-set node anomaly condition, or
determine, when the at least one consensus node is more than one consensus node, one consensus node from the more than one consensus node based on proposal generation quantities respectively corresponding to the at least one consensus node, and use the determined one consensus node as the abnormal node meeting the pre-set node anomaly condition.

In a possible implementation, after the deletion of the abnormal node from the plurality of locally recorded consensus nodes, the screening unit 1301 is further configured to:
reset proposal generation quantities respectively corresponding to locally recorded remaining consensus nodes in the distributed system; and
reset the locally recorded total proposal generation quantity.

In a possible implementation, the screening unit 1301 is further configured to:
generate the target proposal for target transaction information after a consensus request from a client device for the target transaction information is obtained, when the first consensus node is a master node, or
obtain the target proposal from the master node when the first consensus node is a slave node.

In a possible implementation, during the obtaining of the target proposal from the master node, the screening unit 1301 is specifically configured to:
use a proposal from the master node as the target proposal when the proposal from the master node is received within pre-set duration starting from obtaining the consensus request from the client device by the master node, or
use a null proposal as the target proposal when no proposal from the master node is received within the pre-set duration starting from obtaining the consensus request from the client device by the master node.

For ease of description, the above parts fall into modules (or units) based on functions for separate description. Certainly, when the present disclosure is implemented, functions of the modules (or units) can be implemented in one or more pieces of software or hardware.

With regard to the apparatus in the above-mentioned embodiments, the specific mode in which each unit executes a request has been described in detail in the embodiments related to the method, and is not described in detail herein.

A person skilled in the art can understand that various aspects of the present disclosure can be implemented as a system, a method, or a program product. Therefore, various aspects of the present disclosure may be specifically implemented in the following forms, namely: a complete hardware implementation, a complete software implementation (including firmware, microcode, and the like), or an implementation combining hardware and software aspects, which may be collectively referred to as a "circuit", a "module", or a "system" herein.

Based on the same inventive concept, the embodiments of the present disclosure further provide an electronic device. In the embodiments, the electronic device may be a server or a terminal device. FIG. 14 is a schematic structural diagram of a possible electronic device according to the embodiments of the present disclosure. As shown in FIG. 14, an electronic device 1400 includes: a processor 1410 and a memory 1420.

The memory 1420 stores a computer program executable by the processor 1410, and the processor 1410 can execute the operations of the above-mentioned node-based consensus processing method by executing an instruction stored in the memory 1420.

The memory 1420 may be a volatile memory, such as a random access memory (RAM). The memory 1420 may alternatively be a non-volatile memory, such as a read-only memory (ROM), a flash memory, a hard disk drive (HDD), or a solid-state drive (SSD). Alternatively, the memory 1420 is any other medium that can be configured to carry or store desired program code in the form of an instruction or a data structure and that can be accessed by a computer, but is not limited thereto. The memory 1420 may alternatively be a combination of the above memories.

The processor 1410 may include one or more central processing units (CPUs) or be a digital processing unit, or the like. The processor 1410 is configured to implement the above-mentioned node-based consensus processing method when executing the computer program stored in the memory 1420.

In some embodiments, the processor 1410 and the memory 1420 may be implemented on the same chip. In some embodiments, they may alternatively be implemented separately on independent chips.

A specific connection medium between the processor 1410 and the memory 1420 is not limited in the embodiments of the present disclosure. In the embodiments of the present disclosure, an example in which the processor 1410 is connected to the memory 1420 by a bus is used, and the bus is described with a thick line in FIG. 14. Connection modes between other components are only for schematic illustration and are not used for a limitation. The bus may include an address bus, a data bus, a control bus, or the like. For ease of description, only one thick line is used in FIG. 14 for description, but there is no description of only one bus or one type of bus.

Based on the same inventive concept, the embodiments of the present disclosure provide a computer-readable storage medium, including a computer program, when the computer program is run on an electronic device, the computer program being used for causing the electronic device to perform the operations of the node-based consensus processing method described above. In some possible embodiments, various aspects of the node-based consensus processing method according to the present disclosure may alternatively be implemented in the form of a program product, which includes a computer program. When the program product is run on an electronic device, the computer program is used for causing the electronic device to perform the operations of the above-mentioned node-based consensus processing method. For example, the electronic device may perform the operations shown in FIG. 3.

The program product may be any combination of one or more readable media. The readable medium may be a readable signal medium or a readable storage medium. The readable storage medium may be, for example, but is not limited to, electric, magnetic, optical, electromagnetic, infrared, or semiconductor systems, apparatuses, or devices, or any combination thereof. More specific examples (a non-exhaustive list) of readable storage media include: an electrical connection having one or more wires, a portable disk, a hard disk, an RAM, a read-only memory (ROM), an erasable programmable read-only memory (EPROM or a flash memory), an optical fiber, a portable compact disc read-only memory (CD-ROM), an optical storage device, a magnetic storage device, or any appropriate combination thereof.

The program product according to the implementation of the present disclosure may use a CD-ROM and include a computer program, and can be run on an electronic device. However, the program product of the present disclosure is not limited thereto. Herein, the readable storage medium may be any tangible medium containing or storing a computer program, and the computer program may be used by or in combination with a command execution system, apparatus, or device.

The readable signal medium may include a data signal propagated in a baseband or as a part of a carrier, and a readable computer program is carried therein. The propagated data signal may be in various forms, including but not limited to an electromagnetic signal, an optical signal, or any suitable combination thereof. The readable signal medium may alternatively be any readable medium other than the readable storage medium. The readable medium can send, propagate, or transmit a computer program used by or in combination with a command execution system, apparatus, or device.

Although preferred embodiments of the present disclosure have been described, additional changes and modifications may be made to these embodiments by a person skilled in the art once basic inventive concepts are known.

## Claims

1. A node-based consensus processing method, being executed by a first consensus node of a plurality of consensus nodes of a distributed system, the distributed system comprising at least one second consensus node different from the first consensus node, the method comprising:
obtaining a target proposal for consensus processing (S301);
selecting, in response to a total proposal generation quantity reaching a first pre-set threshold, an abnormal node from the plurality of consensus nodes based on a plurality of proposal generation quantities each corresponding to one of the plurality of consensus nodes (S301);
transmitting, for a primary voting stage on the target proposal, a first primary vote to the second consensus node, and receiving a second primary vote from the second consensus node, the first primary vote carrying an abnormal node identifier of the abnormal node (S302);
transmitting, in response to a quantity of the at least one second primary vote carrying the abnormal node identifier reaching a second pre-set threshold and for a secondary voting stage on the target proposal, a first secondary vote to the second consensus node, and receiving a second secondary vote from the second consensus node, the first secondary vote carrying the abnormal node identifier (S303); and
deleting, in response to a quantity of the at least one second secondary vote carrying the abnormal node identifier reaching a third pre-set threshold, the abnormal node from the plurality of consensus nodes (S304).

2. The method according to claim 1, **characterized by** further comprising:
accumulating a proposal generation quantity corresponding to a master node by a pre-set increment, and updating the total proposal generation quantity by adding the pre-set increment, when the plurality of consensus nodes reach a consensus on a non-null proposal generated by the master node during each round of consensus, wherein the master node is one of the plurality of consensus nodes.

3. The method according to claim 1 or 2, **characterized in that** the first consensus node locally records node proposal mapping information, and the node proposal mapping information comprises: node identifiers of the plurality of consensus nodes and the plurality of proposal generation quantities each corresponding to one of the plurality of consensus nodes, and
the total proposal generation quantity is determined in the following mode:
obtaining the plurality of proposal generation quantities each corresponding to one of the plurality of consensus nodes from the node proposal mapping information; and
determining the total proposal generation quantity based on the obtained plurality of proposal generation quantities each corresponding to one of the plurality of consensus nodes.

4. The method according to claim 1, 2, or 3, **characterized in that** the selecting the abnormal node (S301) comprises:
selecting, from the plurality of consensus nodes, at least one consensus node with a proposal generation quantity being less than a fourth pre-set threshold; and
determining one of the at least one consensus node as the abnormal node.

5. The method according to claim 4, **characterized in that** the determining one of the at least one consensus node as the abnormal node comprises:
using, when the at least one consensus node is one consensus node, the one consensus node as the abnormal node, or
determining, when the at least one consensus node is more than one consensus node, one consensus node from the more than one consensus node based on proposal generation quantities respectively corresponding to the at least one consensus node, and using the determined one consensus node as the abnormal node.

6. The method according to any one of claims 1 to 5, **characterized in that** after deleting the abnormal node from the plurality of consensus nodes (S304), the method further comprises:
resetting proposal generation quantities respectively corresponding to remaining consensus nodes in the distributed system; and
resetting the total proposal generation quantity.

7. The method according to any one of claims 1 to 6, **characterized in that** the target proposal is obtained in the following mode:
generating the target proposal for target transaction information after a consensus request from a client device for the target transaction information is obtained, when the first consensus node is a master node, or
obtaining the target proposal from the master node when the first consensus node is a slave node.

8. The method according to claim 7, **characterized in that** obtaining the target proposal from the master node comprises:
using a proposal from the master node as the target proposal when the proposal from the master node is received within pre-set duration starting from obtaining the consensus request from the client device by the master node, or
using a null proposal as the target proposal when no proposal from the master node is received within the pre-set duration starting from obtaining the consensus request from the client device by the master node.

9. A node-based consensus processing apparatus (1300), being implemented on a first consensus node of a plurality of consensus nodes of a distributed system, the distributed system comprising at least one second consensus node different from the first consensus node, the apparatus comprising:
a screening unit (1301), configured to obtain a target proposal for consensus processing, and select, in response to a total proposal generation quantity reaching a first pre-set threshold, an abnormal node from the plurality of consensus nodes based on a plurality of proposal generation quantities each corresponding to one of the plurality of consensus nodes;
a primary voting unit (1302), configured to transmit, for a primary voting stage on the target proposal, a first primary vote to the second consensus node, and receive a second primary vote from the second consensus node, the first primary vote carrying an abnormal node identifier of the abnormal node;
a secondary voting unit (1303), configured to transmit, in response to a quantity of the at least one second primary vote carrying the abnormal node identifier reaching a second pre-set threshold and for a secondary voting stage on the target proposal, a first secondary vote to the second consensus node, and receive a second secondary vote from the second consensus node, the first secondary vote carrying the abnormal node identifier; and
a node adjustment unit (1304), configured to delete, in response to a quantity of the at least one second secondary vote carrying the abnormal node identifier reaching a third pre-set threshold, the abnormal node from the plurality of consensus nodes.

10. An electronic device, comprising a processor and a memory, a computer program being stored in the memory, and the computer program, when executed by the processor, causing the processor to perform the operations of the method according to any one of claims 1 to 8.

11. A computer-readable storage medium, comprising a computer program, when the computer program is run on an electronic device, the computer program being used for causing the electronic device to perform the operations of the method according to any one of claims 1 to 8.

12. A computer program product, comprising a computer program, the computer program being stored in a computer-readable storage medium, and a processor of an electronic device reading the computer program from the computer-readable storage medium and executing the computer program, to cause the electronic device to perform the operations of the method according to any one of claims 1 to 8.

## Patentansprüche

1. Ein knotenbasiertes Konsensverarbeitungsverfahren, das von einem ersten Konsensknoten einer Vielzahl von Konsensknoten eines verteilten Systems ausgeführt wird, wobei das verteilte System mindestens einen zweiten Konsensknoten umfasst, der sich von dem ersten Konsensknoten unterscheidet, wobei das Verfahren umfasst:
Erhalten eines Zielvorschlags zur Konsensverarbeitung (S301);
Auswählen, in Reaktion darauf, dass eine Gesamtvorschlagserzeugungsanzahl einen ersten voreingestellten Schwellenwert erreicht, eines anormalen Knotens aus der Vielzahl von Konsensknoten basierend auf einer Vielzahl von Vorschlagserzeugungsanzahlen, die jeweils einem der Vielzahl von Konsensknoten entsprechen (S301);
Senden, für eine primäre Abstimmungsphase zu dem Zielvorschlag, einer ersten Primärstimme an den zweiten Konsensknoten und Empfangen einer zweiten Primärstimme von dem zweiten Konsensknoten, wobei die erste Primärstimme eine Anormal-Knoten-Kennung des anormalen Knotens trägt (S302);
Senden, in Reaktion darauf, dass eine Anzahl der mindestens einen zweiten Primärstimme, die die Anormal-Knoten-Kennung trägt, einen zweiten voreingestellten Schwellenwert erreicht, und für eine sekundäre Abstimmungsphase zu dem Zielvorschlag, einer ersten Sekundärstimme an den zweiten Konsensknoten und Empfangen einer zweiten Sekundärstimme von dem zweiten Konsensknoten, wobei die erste Sekundärstimme die Anormal-Knoten-Kennung trägt (S303); und
Löschen, in Reaktion darauf, dass eine Anzahl der mindestens einen zweiten Sekundärstimme, die die Anormal-Knoten-Kennung trägt, einen dritten voreingestellten Schwellenwert erreicht, des anormalen Knotens aus der Vielzahl von Konsensknoten (S304).

2. Verfahren nach Anspruch 1, **dadurch gekennzeichnet, dass** es ferner umfasst:
Akkumulieren einer einem Master-Knoten entsprechenden Vorschlagserzeugungsanzahl um ein voreingestelltes Inkrement und Aktualisieren der Gesamtvorschlagserzeugungsanzahl durch Addieren des voreingestellten Inkrements, wenn die Vielzahl von Konsensknoten während jeder Konsensrunde einen Konsens über einen von dem Master-Knoten erzeugten Nicht-Null-Vorschlag erzielt, wobei der Master-Knoten einer der Vielzahl von Konsensknoten ist.

3. Verfahren nach Anspruch 1 oder 2, **dadurch gekennzeichnet, dass** der erste Konsensknoten lokal Knoten-Vorschlag-Zuordnungsinformationen aufzeichnet und die Knoten-Vorschlag-Zuordnungsinformationen umfassen: Knotenkennungen der Vielzahl von Konsensknoten und die Vielzahl von Vorschlagserzeugungsanzahlen, die jeweils einem der Vielzahl von Konsensknoten entsprechen, und
die Gesamtvorschlagserzeugungsanzahl in dem folgenden Modus bestimmt wird:
Erhalten der Vielzahl von Vorschlagserzeugungsanzahlen, die jeweils einem der Vielzahl von Konsensknoten entsprechen, aus den Knoten-Vorschlag-Zuordnungsinformationen; und
Bestimmen der Gesamtvorschlagserzeugungsanzahl basierend auf der erhaltenen Vielzahl von Vorschlagserzeugungsanzahlen, die jeweils einem der Vielzahl von Konsensknoten entsprechen.

4. Verfahren nach Anspruch 1, 2 oder 3, **dadurch gekennzeichnet, dass** das Auswählen des anormalen Knotens (S301) umfasst:
Auswählen, aus der Vielzahl von Konsensknoten, mindestens eines Konsensknotens mit einer Vorschlagserzeugungsanzahl, die kleiner als ein vierter voreingestellter Schwellenwert ist; und
Bestimmen eines der mindestens einen Konsensknoten als den anormalen Knoten.

5. Verfahren nach Anspruch 4, **dadurch gekennzeichnet, dass** das Bestimmen eines der mindestens einen Konsensknoten als den anormalen Knoten umfasst:
Verwenden, wenn der mindestens eine Konsensknoten ein Konsensknoten ist, des einen Konsensknotens als den anormalen Knoten, oder
Bestimmen, wenn der mindestens eine Konsensknoten mehr als ein Konsensknoten ist, eines Konsensknotens aus den mehr als einem Konsensknoten basierend auf Vorschlagserzeugungsanzahlen, die jeweils dem mindestens einen Konsensknoten entsprechen, und Verwenden des bestimmten einen Konsensknotens als den anormalen Knoten.

6. Verfahren nach einem der Ansprüche 1 bis 5, **dadurch gekennzeichnet, dass** das Verfahren nach dem Löschen des anormalen Knotens aus der Vielzahl von Konsensknoten (S304) ferner umfasst:
Zurücksetzen von Vorschlagserzeugungsanzahlen, die jeweils verbleibenden Konsensknoten in dem verteilten System entsprechen; und
Zurücksetzen der Gesamtvorschlagserzeugungsanzahl.

7. Verfahren nach einem der Ansprüche 1 bis 6, **dadurch gekennzeichnet, dass** der Zielvorschlag in dem folgenden Modus erhalten wird:
Erzeugen des Zielvorschlags für Zieltransaktionsinformationen, nachdem eine Konsensanforderung von einer Client-Vorrichtung für die Zieltransaktionsinformationen erhalten wird, wenn der erste Konsensknoten ein Master-Knoten ist, oder
Erhalten des Zielvorschlags von dem Master-Knoten, wenn der erste Konsensknoten ein Slave-Knoten ist.

8. Verfahren nach Anspruch 7, **dadurch gekennzeichnet, dass** das Erhalten des Zielvorschlags von dem Master-Knoten umfasst:
Verwenden eines Vorschlags von dem Master-Knoten als den Zielvorschlag, wenn der Vorschlag von dem Master-Knoten innerhalb einer voreingestellten Zeitdauer empfangen wird, die mit dem Erhalten der Konsensanforderung von der Client-Vorrichtung durch den Master-Knoten beginnt, oder
Verwenden eines Nullvorschlags als den Zielvorschlag, wenn innerhalb der voreingestellten Zeitdauer, die mit dem Erhalten der Konsensanforderung von der Client-Vorrichtung durch den Master-Knoten beginnt, kein Vorschlag von dem Master-Knoten empfangen wird.

9. Eine knotenbasierte Konsensverarbeitungsvorrichtung (1300), die auf einem ersten Konsensknoten einer Vielzahl von Konsensknoten eines verteilten Systems implementiert ist, wobei das verteilte System mindestens einen zweiten Konsensknoten umfasst, der sich von dem ersten Konsensknoten unterscheidet, wobei die Vorrichtung umfasst:
eine Screening-Einheit (1301), die dazu konfiguriert ist, einen Zielvorschlag zur Konsensverarbeitung zu erhalten und, in Reaktion darauf, dass eine Gesamtvorschlagserzeugungsanzahl einen ersten voreingestellten Schwellenwert erreicht, einen anormalen Knoten aus der Vielzahl von Konsensknoten basierend auf einer Vielzahl von Vorschlagserzeugungsanzahlen auszuwählen, die jeweils einem der Vielzahl von Konsensknoten entsprechen;
eine Primärabstimmungseinheit (1302), die dazu konfiguriert ist, für eine primäre Abstimmungsphase zu dem Zielvorschlag eine erste Primärstimme an den zweiten Konsensknoten zu senden und eine zweite Primärstimme von dem zweiten Konsensknoten zu empfangen, wobei die erste Primärstimme eine Anormal-Knoten-Kennung des anormalen Knotens trägt;
eine Sekundärabstimmungseinheit (1303), die dazu konfiguriert ist, in Reaktion darauf, dass eine Anzahl der mindestens einen zweiten Primärstimme, die die Anormal-Knoten-Kennung trägt, einen zweiten voreingestellten Schwellenwert erreicht, und für eine sekundäre Abstimmungsphase zu dem Zielvorschlag eine erste Sekundärstimme an den zweiten Konsensknoten zu senden und eine zweite Sekundärstimme von dem zweiten Konsensknoten zu empfangen, wobei die erste Sekundärstimme die Anormal-Knoten-Kennung trägt; und
eine Knotenanpassungseinheit (1304), die dazu konfiguriert ist, in Reaktion darauf, dass eine Anzahl der mindestens einen zweiten Sekundärstimme, die die Anormal-Knoten-Kennung trägt, einen dritten voreingestellten Schwellenwert erreicht, den anormalen Knoten aus der Vielzahl von Konsensknoten zu löschen.

10. Eine elektronische Vorrichtung, umfassend einen Prozessor und einen Speicher, wobei ein Computerprogramm in dem Speicher gespeichert ist und das Computerprogramm, wenn es von dem Prozessor ausgeführt wird, bewirkt, dass der Prozessor die Operationen des Verfahrens nach einem der Ansprüche 1 bis 8 ausführt.

11. Ein computerlesbares Speichermedium, umfassend ein Computerprogramm, wobei, wenn das Computerprogramm auf einer elektronischen Vorrichtung ausgeführt wird, das Computerprogramm dazu verwendet wird, zu bewirken, dass die elektronische Vorrichtung die Operationen des Verfahrens nach einem der Ansprüche 1 bis 8 ausführt.

12. Ein Computerprogrammprodukt, umfassend ein Computerprogramm, wobei das Computerprogramm in einem computerlesbaren Speichermedium gespeichert ist und ein Prozessor einer elektronischen Vorrichtung das Computerprogramm aus dem computerlesbaren Speichermedium liest und das Computerprogramm ausführt, um zu bewirken, dass die elektronische Vorrichtung die Operationen des Verfahrens nach einem der Ansprüche 1 bis 8 ausführt.

## Revendications

1. Un procédé de traitement de consensus basé sur des nœuds, exécuté par un premier nœud de consensus d'une pluralité de nœuds de consensus d'un système distribué, le système distribué comprenant au moins un second nœud de consensus différent du premier nœud de consensus, le procédé comprenant :
obtenir une proposition cible pour un traitement de consensus (S301);
sélectionner, en réponse à une quantité totale de génération de propositions atteignant un premier seuil prédéfini, un nœud anormal parmi la pluralité de nœuds de consensus sur la base d'une pluralité de quantités de génération de propositions correspondant chacune à l'un des nœuds de consensus de la pluralité (S301);
transmettre, pour une étape de vote primaire sur la proposition cible, un premier vote primaire au second nœud de consensus, et recevoir un second vote primaire en provenance du second nœud de consensus, le premier vote primaire portant un identifiant de nœud anormal du nœud anormal (S302);
transmettre, en réponse à un nombre dudit au moins un second vote primaire portant l'identifiant de nœud anormal atteignant un deuxième seuil prédéfini et pour une étape de vote secondaire sur la proposition cible, un premier vote secondaire au second nœud de consensus, et recevoir un second vote secondaire en provenance du second nœud de consensus, le premier vote secondaire portant l'identifiant de nœud anormal (S303); et
supprimer, en réponse à un nombre dudit au moins un second vote secondaire portant l'identifiant de nœud anormal atteignant un troisième seuil prédéfini, le nœud anormal de la pluralité de nœuds de consensus (S304).

2. Le procédé selon la revendication 1, **caractérisé en ce qu'**il comprend en outre :
accumuler une quantité de génération de propositions correspondant à un nœud maître par un incrément prédéfini, et mettre à jour la quantité totale de génération de propositions en ajoutant l'incrément prédéfini, lorsque la pluralité de nœuds de consensus parvient à un consensus sur une proposition non nulle générée par le nœud maître au cours de chaque tour de consensus, dans lequel le nœud maître est l'un des nœuds de consensus de la pluralité.

3. Le procédé selon la revendication 1 ou 2, **caractérisé en ce que** le premier nœud de consensus enregistre localement des informations de mise en correspondance nœud-proposition, et les informations de mise en correspondance nœud-proposition comprennent : des identifiants de nœud de la pluralité de nœuds de consensus et la pluralité de quantités de génération de propositions correspondant chacune à l'un des nœuds de consensus de la pluralité, et
la quantité totale de génération de propositions est déterminée de la manière suivante :
obtenir, à partir des informations de mise en correspondance nœud-proposition, la pluralité de quantités de génération de propositions correspondant chacune à l'un des nœuds de consensus de la pluralité; et
déterminer la quantité totale de génération de propositions sur la base de la pluralité obtenue de quantités de génération de propositions correspondant chacune à l'un des nœuds de consensus de la pluralité.

4. Le procédé selon la revendication 1, 2 ou 3, **caractérisé en ce que** la sélection du nœud anormal (S301) comprend :
sélectionner, parmi la pluralité de nœuds de consensus, au moins un nœud de consensus ayant une quantité de génération de propositions inférieure à un quatrième seuil prédéfini; et
déterminer l'un dudit au moins un nœud de consensus comme étant le nœud anormal.

5. Le procédé selon la revendication 4, **caractérisé en ce que** la détermination de l'un dudit au moins un nœud de consensus comme étant le nœud anormal comprend :
utiliser, lorsque ledit au moins un nœud de consensus est un unique nœud de consensus, l'unique nœud de consensus comme étant le nœud anormal, ou
déterminer, lorsque ledit au moins un nœud de consensus comprend plus d'un nœud de consensus, un nœud de consensus parmi lesdits plus d'un nœud de consensus sur la base de quantités de génération de propositions correspondant respectivement audit au moins un nœud de consensus, et utiliser le nœud de consensus déterminé comme étant le nœud anormal.

6. Le procédé selon l'une quelconque des revendications 1 à 5, **caractérisé en ce qu'**après la suppression du nœud anormal de la pluralité de nœuds de consensus (S304), le procédé comprend en outre :
réinitialiser des quantités de génération de propositions correspondant respectivement aux nœuds de consensus restants dans le système distribué; et
réinitialiser la quantité totale de génération de propositions.

7. Le procédé selon l'une quelconque des revendications 1 à 6, **caractérisé en ce que** la proposition cible est obtenue de la manière suivante :
générer la proposition cible pour des informations de transaction cible après qu'une demande de consensus provenant d'un dispositif client pour les informations de transaction cible a été obtenue, lorsque le premier nœud de consensus est un nœud maître, ou
obtenir la proposition cible auprès du nœud maître lorsque le premier nœud de consensus est un nœud esclave.

8. Le procédé selon la revendication 7, **caractérisé en ce que** l'obtention de la proposition cible auprès du nœud maître comprend :
utiliser une proposition provenant du nœud maître comme proposition cible lorsque la proposition provenant du nœud maître est reçue dans une durée prédéfinie commençant à compter de l'obtention, par le nœud maître, de la demande de consensus provenant du dispositif client, ou
utiliser une proposition nulle comme proposition cible lorsqu'aucune proposition provenant du nœud maître n'est reçue dans la durée prédéfinie commençant à compter de l'obtention, par le nœud maître, de la demande de consensus provenant du dispositif client.

9. Un appareil de traitement de consensus basé sur des nœuds (1300), mis en œuvre sur un premier nœud de consensus d'une pluralité de nœuds de consensus d'un système distribué, le système distribué comprenant au moins un second nœud de consensus différent du premier nœud de consensus, l'appareil comprenant :
une unité de filtrage (1301), configurée pour obtenir une proposition cible pour un traitement de consensus, et sélectionner, en réponse à une quantité totale de génération de propositions atteignant un premier seuil prédéfini, un nœud anormal parmi la pluralité de nœuds de consensus sur la base d'une pluralité de quantités de génération de propositions correspondant chacune à l'un des nœuds de consensus de la pluralité;
une unité de vote primaire (1302), configurée pour transmettre, pour une étape de vote primaire sur la proposition cible, un premier vote primaire au second nœud de consensus, et recevoir un second vote primaire en provenance du second nœud de consensus, le premier vote primaire portant un identifiant de nœud anormal du nœud anormal;
une unité de vote secondaire (1303), configurée pour transmettre, en réponse à un nombre dudit au moins un second vote primaire portant l'identifiant de nœud anormal atteignant un deuxième seuil prédéfini et pour une étape de vote secondaire sur la proposition cible, un premier vote secondaire au second nœud de consensus, et recevoir un second vote secondaire en provenance du second nœud de consensus, le premier vote secondaire portant l'identifiant de nœud anormal; et
une unité d'ajustement de nœud (1304), configurée pour supprimer, en réponse à un nombre dudit au moins un second vote secondaire portant l'identifiant de nœud anormal atteignant un troisième seuil prédéfini, le nœud anormal de la pluralité de nœuds de consensus.

10. Un dispositif électronique, comprenant un processeur et une mémoire, un programme informatique étant stocké dans la mémoire, et le programme informatique, lorsqu'il est exécuté par le processeur, amenant le processeur à effectuer les opérations du procédé selon l'une quelconque des revendications 1 à 8.

11. Un support de stockage lisible par ordinateur, comprenant un programme informatique, lorsque le programme informatique est exécuté sur un dispositif électronique, le programme informatique étant utilisé pour amener le dispositif électronique à effectuer les opérations du procédé selon l'une quelconque des revendications 1 à 8.

12. Un produit-programme informatique, comprenant un programme informatique, le programme informatique étant stocké dans un support de stockage lisible par ordinateur, et un processeur d'un dispositif électronique lisant le programme informatique à partir du support de stockage lisible par ordinateur et exécutant le programme informatique, pour amener le dispositif électronique à effectuer les opérations du procédé selon l'une quelconque des revendications 1 à 8.
